# EUROPÄISCHE PATENTSCHRIFT

(11) **EP 2 258 243 B1**
(45) Veröffentlichungstag und Bekanntmachung des Hinweises auf die Patenterteilung: **07.12.2011**
(21) Anmeldenummer: 10405101.6
(22) Anmeldetag: 12.05.2010
(51) Int. Cl.: A47J 27/09, A47J 27/08

(54) **Schnellkochtopf**
Pressure cooker
Cuiseur à pression

(30) Priorität: 02.06.2009 CH 8392009
(43) Veröffentlichungstag der Anmeldung: 08.12.2010
(73) Patentinhaber: Kuhn Rikon AG, 8486 Rikon im Tösstal (CH)
(72) Erfinder: Zeindler, Rolf, 8484 Weisslingen (CH)
(74) Vertreter: Groner, Manfred

(56) Entgegenhaltungen:
- EP-A- 1 295 551
- DE-A1- 2 646 937
- DE-U1- 8 012 696
- GB-A- 1 506 638
- GB-A- 2 120 578
- US-A- 4 396 130
- US-A- 4 932 550

## Beschreibung

Die Erfindung betrifft einen Schnellkochtopf nach dem Oberbegriff des Anspruchs 1.

Schnellkochtöpfe dieser Art sind allgemein bekannt. Durch Erwärmen des Bodens des Topfes kann der Druck im Innern des geschlossenen Schnellkochtopfes erhöht werden, so dass ein Garprozess beschleunigt wird. Der Deckel ist in der Regel mit einer Bajonettverbindung mit dem Topf verbunden und besitzt innenseitig einen Dichtungsring, der auch bei Überdruck eine Dichtigkeit zwischen dem Deckel und dem Topf gewährleistet. Der Deckel kann mit Drehbewegungen mit dem Topf verbunden und auch von diesem gelöst werden. Damit ein Druckaufbau erst bei vollständig geschlossenem Schnellkochtopf möglich ist und bei einem vorbestimmten Überdruck dieser nicht mehr geöffnet werden kann, sind Verriegelungsvorrichtungen zwingend.

Bei einer solchen bekannten Verriegelungsvorrichtung ist am Deckel ein Druckelement angeordnet, welches einen Bolzen besitzt, der nach dem Erreichen eines vorbestimmten Überdruckes über dem Deckel vorsteht. Dieser Bolzen kann erst in die genannte Stellung verschoben werden, wenn er durch ein Verriegelungselement freigegeben wird. Steht der Bolzen über den Deckel vor, so verhindert dieser in Zusammenwirkung mit dem genannten Verriegelungselement ein Verdrehen und damit ein Öffnen des Schnellkochtopfes. Solche Verriegelungsvorrichtungen sind beispielsweise aus der US 4,932,550, US 4,620,643, US 5,135,121 und US 6,705,209 bekannt geworden.

Die US 4,932,550 offenbart einen Schnellkochtopf mit einer Verriegelungsvorrichtung, die zur Steuerung einen Stift aufweist, der von einer Feder belastet ist und mit einem Bajonett des Topfes zusammenwirkt. Die US 4,396,130 offenbart einen Schnellkochtopf, der ebenfalls eine Verriegelungsvorrichtung besitzt. Diese wirkt jedoch gemäss den Fig. 10 und 11 zwischen jeweils einem Bajonett des Deckels und einem Bajonett des Topfes. Zudem ist ein Nocken vorgesehen, der auf den Dichtungsring wirkt. Dieser Nocken ist von einem Bajonett des Topfes gesteuert. Die Verriegelungsvornchtung wird erst dann sicherungswirksam, wenn ein gewisser Druck im Topf aufgebaut ist.

Damit der Deckel in einfacher Weise auf den Topf aufgesetzt und geschlossen werden kann, sind Toleranzen zwischen dem Topf und dem Deckel notwendig. Solche Toleranzen können jedoch dazu führen, dass im Topf auch dann ein Druck aufgebaut werden kann, wenn die Bajonette am Deckel nur teilweise an den Bajonetten des Topfes eingreifen.

Der Erfindung liegt die Aufgabe zugrunde, einen Kochtopf der genannten Art zu schaffen, der die genannten Nachteile vermeidet. Er soll zudem kostengünstig herstellbar und einfach zu bedienen sein.

Die Aufgabe ist bei einem gattungsgemässen Schnellkochtopf gemäss Anspruch 1 gelöst. Das Verriegelungselement verhindert, dass im Schnellkochtopf ein Druck aufgebaut werden kann.

Beim erfindungsgemässen Schnellkochtopf sind somit zwei an sich völlig unterschiedlich wirkende Sicherheitsorgane vorgesehen. Das Sicherheitselement ist wirksam bis das Verriegelungselement auch unter Berücksichtigung der genannten vergleichsweise grossen Toleranzen sicher mit dem Druckelement so in Eingriff ist, dass ein Überdruck nicht aufgebaut werden kann. Beim nachfolgenden Schliessvorgang übernimmt nun das Verriegelungselement bzw. die Verriegelungsvorrichtung die Sicherheitsfunktion. Ist der Schnellkochtopf vollständig geschlossen, so verhindert die Verriegelungsvorrichtung nach einem Druckaufbau ein unsachgemässes Öffnen. Das Sicherheitselement ist hierbei nicht wirksam.

Die Verriegelungsvorrichtung und das Sicherheitselement können in einem Beschlag, beispielsweise in einem Griff auf vergleichsweise kleinem Raum gelagert werden. Die Handhabung des Schnellkochtopfs wird durch die Erfindung nicht beeinträchtigt. Er kann somit wie bisher geschlossen und geöffnet werden solange er nicht undicht ist. Die Sicherheit ist aber durch das Zusammenwirken der Verriegelungsvorrichtung und des Sicherheitselementes wesentlich erhöht. Dies auch bei vergleichsweise grossen Toleranzen, vor allem der aus Metall hergestellten Teile. Die Verriegelungsvorrichtung und das Sicherheitselement können aber auch in unterschiedlichen Beschlägen untergebracht sein. Ein wesentlicher Vorteil der Erfindung wird auch darin gesehen, dass der Deckel in jeder Bajonettposition aufgesetzt werden kann. Der Deckel kann somit nicht falsch aufgesetzt werden.

Nach der Erfindung ist vorgesehen, dass das Verriegelungselement in Drehschliessrichtung des Deckels gesehen vor dem Sicherheitselement angeordnet ist. Dadurch ist es möglich, das Sicherheitselement und das Verriegelungselement nacheinander an einer Rampe eines Bajonetts zu steuern. Beim Schliessen des Schnellkochtopfes wird dann insbesondere zuerst das Verriegelungselement und anschliessend das Sicherheitselement radial nach Aussen bewegt. Dadurch ist eine einfachere und sichere Steuerung möglich.

Nach einer Weiterbildung der Erfindung ist vorgesehen, dass das Verriegelungselement einen Steuernocken aufweist, der mit einem vorderen Ende eine Ausnehmung in einem Rand des Deckels durchgreift. Vorzugsweise ist diese Ausnehmung so ausgebildet, dass sie zudem einen Nocken des Sicherheitselementes aufnehmen kann. Für beide Elemente ist somit am Rand des Deckels lediglich eine Ausnehmung, beispielsweise eine Ausstanzung erforderlich.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Fig. 1: Schematisch eine räumliche Ansicht eines erfindungsgemässen Schnell- kochtopfs, wobei einzelne Teile aus zeichnerischen Gründen auseinander gezogen sind,
- Fig. 2: ein Teilschnitt durch den Schnellkochtopf nach Figur 1, wobei die Verriege- lungsvorrichtung in einer Stellung ist, in der ein Druckaufbau verhindert ist.
- Fig.3: ein Schnitt gemäss Figur 2, wobei der Schnellkochtopf vollständig ge- schlossen ist und sich somit ein Druck aufbauen kann,
- Fig. 4 - 7: Teilschnitte durch den Schnellkochtopf zur Illustration der einzelnen Phasen beim Schliessvorgang.

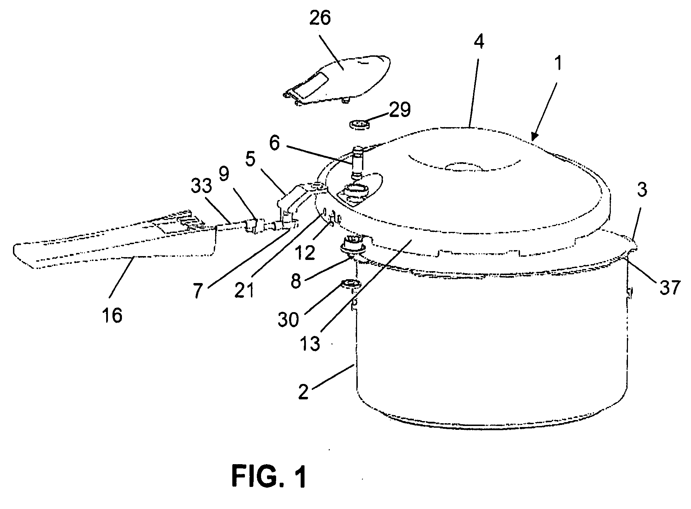

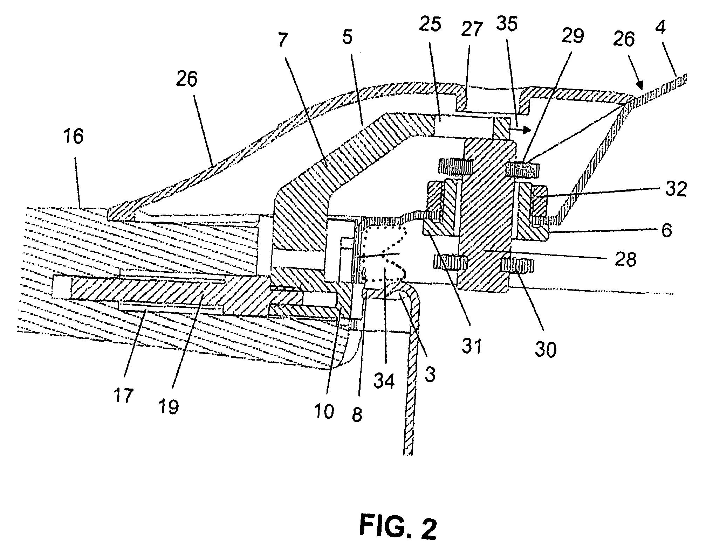

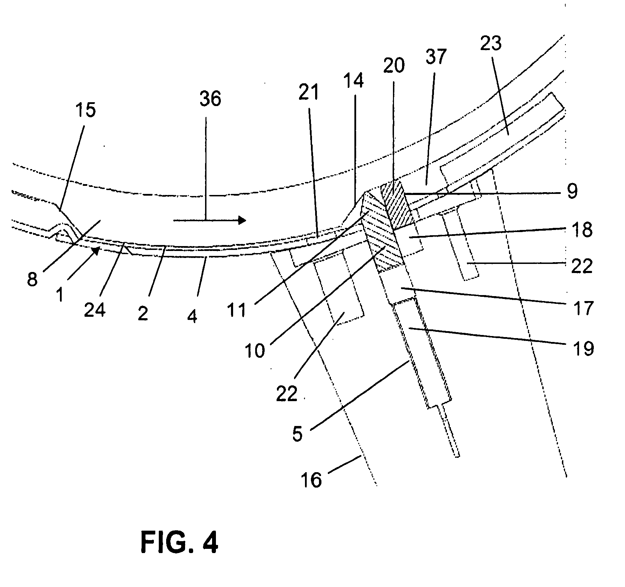

Die Figur 1 zeigt den Schnellkochtopf 1, der einen an sich üblichen Topf 2 aufweist, der an einem Rand 3 mehrere Bajonette 8 besitzt. Zwischen jeweils zwei Bajonetten 3 befindet sich eine Ausnehmung 37, die sich in Umfangsrichtung des Randes 3 erstreckt. Der oben offene Topf 2 kann mit einem Deckel 4 verschlossen werden. Dies durch eine begrenzte relative Bewegung zwischen dem Topf 2 und dem Deckel 4. Der Deckel 4 besitzt ebenfalls Bajonette 23 (Figur 4), die beim Schliessen des Schnellkochtopfes 1 jeweils unter ein Bajonett 8 bewegt werden. Der Deckel 4 besitzt innerhalb eines umlaufenden Randes 13 einen in Figur 2 punktiert angedeuteten und an sich bekannten Dichtungsring 34. Bei einem Druckaufbau im Schnellkochtopf 1 wird dieser Dichtungsring 34 am Rand 13 des Deckels 4 und am Rand 3 des Topfs 2 angepresst.

Am Deckel 4 ist eine Verriegelungsvorrichtung 5 angebracht, die mit einem am Deckel 4 angeordneten Druckelement 6 zusammenarbeitet. Die Verriegelungsvorrichtung 5 ist in einem Beschlag 16 gelagert, der beispielsweise als Griff ausgebildet ist. Am Topf 2 sind hier nicht gezeigte weitere Beschläge angebracht. Der Beschlag 16 ist an der Aussenseite des Randes 13 befestigt, wozu dieser zwei im Abstand zueinander angeordnete Durchgänge 21 für hier nicht gezeigte Befestigungsteile aufweist. Der Beschlag 16 besitzt zur Aufnahme dieser Befestigungsteile gemäss Figur 4 entsprechende Befestigungsbohrungen 22.

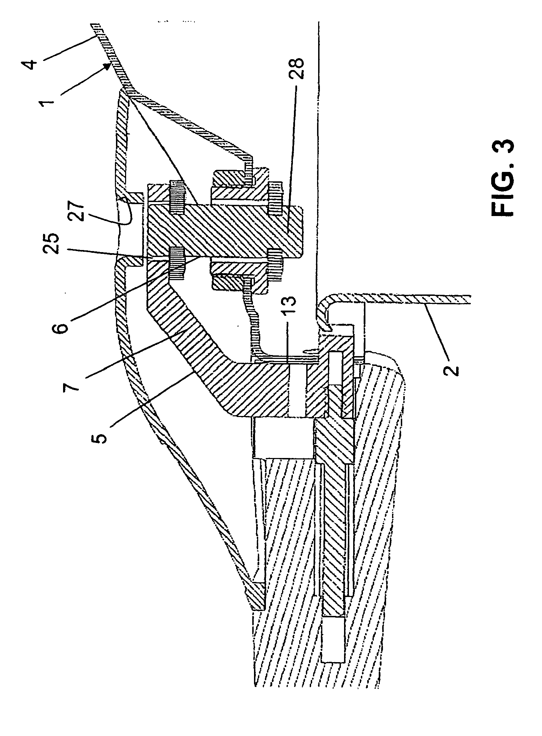

Die Verriegelungsvorrichtung 5 besitzt gemäss den Figuren 2 und 3 ein winkelförmiges Verriegelungselement 7, das mit einem Führungselement 19 verschieblich im Beschlag 16 gelagert ist. Das Führungselement 19 ist in einer Ausnehmung 17 von einem hier nicht gezeigten Federelement baufschlagt, so dass das Verriegelungselement 7 gegen die rückwirkende Kraft dieses Federelementes radial nach Aussen bewegbar ist. Diese Bewegung ist in beiden Richtungen begrenzt. Das Führungselement 19 und das Verriegelungselement 7 sind fest miteinander verbunden. Das Verriegelungselement 7 besitzt an einem oberen und vorderen Bereich eine Öffnung 25. Befindet sich das Verriegelungselement 7 in der in Figur 2 gezeigten zurückgezogenen Position, so ist die Öffnung 25 bezüglich eines Bolzens 28 des Druckelementes 6 nach Innen versetzt. In der in Figur 3 gezeigten Position des Verriegelungselementes 7 befindet sich die Öffnung 25 so über dem Bolzen 28, dass dieser in die Öffnung 25 einfahren kann. Befindet sich der Bolzen 28 in der in Figur 2 gezeigten Position, so ist das Druckelement 6 in einem Zustand, in dem im Topf 2 sich nur ein geringer Überdruck aufbauen kann. Steht der Bolzen 28 jedoch am Verriegelungselement 7 gemäss Figur 3 nicht an, so kann der Überdruck erhöht werden. Der Bolzen 28 ist durch eine Öffnung 27 der Abdeckung 26 sichtbar.

Die radialen Bewegungen des Verriegelungselementes 7 beim Schliessen und Öffnen des Schnellkochtopfes 1 werden mit einem Steuernocken 10 gesteuert, der durch das genannte Federelement am Rand 3 angepresst wird. Befindet sich der Nocken 10 in einer Ausnehmung 37 des Randes 3, so befindet sich das Verriegelungselement 7 in der in Figur 3 gezeigten Position. Liegt der Steuernocken 10 hingegen an einer Frontseite 24 (Figur 4) eines Bajonetts 8 an, so befindet sich das Verriegelungselement 7 in der in Figur 2 gezeigten Stellung. Durch ein Bajonett 8 kann somit der Steuernocken 10 nach Aussen in die verriegelnde Position bewegt werden. Zur Steuerung dieser Bewegungen besitzen die Bajonette 8 jeweils eine erste Rampe 14 und eine zweite Rampe 15. An der ersten Rampe 14 wird das Verriegelungselement 7 beim Schliessen des Schnellkochtopfs 1 radial nach Aussen und an der zweiten Rampe 15 radial nach Innen bewegt. Beim Öffnen des Schnellkochtopfes 1 steuert die zweite Rampe 15 das Verriegelungselement 7 radial nach Aussen und die erste Rampe 14 dieses nach Innen.

Im Beschlag 16 ist zudem ein Sicherheitselement 9 gelagert, das gemäss Figur 1 einen Führungsteil 33 aufweist, der einen Nocken 20 so führt, dass dieser begrenzt radial nach Innen und nach Aussen bewegbar ist. Das Sicherheitselement 9 ist ebenfalls von einer hier nicht gezeigten Feder belastet, die in einer Ausnehmung 18 (Figur 4) des Bajonetts 16 gelagert ist. Wie die Figur 4 zeigt, befindet sich das Sicherheitselement 9 unmittelbar neben der Verriegelungsvorrichtung 5. Das Sicherheitselement 9 wirkt mit dem Dichtungsring 34 so zusammen, dass ein Druckaufbau erst dann möglich ist, wenn die Bajonette 8 des Topfes 2 und die Bajonette 23 des Deckels 4 ineinander greifen. Das Sicherheitselement 9 wird ebenfalls durch den Rand 3 des Topfes 2 gesteuert. Der Nocken 20 wird somit ebenfalls federelastisch nach Innen gegen den Rand 3 gespannt.

Das Sicherheitselement 9 liegt mit einer vorderen vergleichsweise breiten Fläche 39 am Rand 3 an, wie beispielsweise die Figur zeigt. Der Steuernocken 10 hingegen besitzt an einem vorderen doppelkeilförmigen Ende 11 eine vergleichsweise schmale Kante 38, die am Rand 3 angepresst wird. Zwischen der Kante 38 und der Fläche 39 besteht somit ein definierter Abstand.

Nachfolgend wird die Wirkungsweise des erfindungsgemässen Schnellkochtopfes 1 bzw. deren Sicherheitselemente näher erläutert.

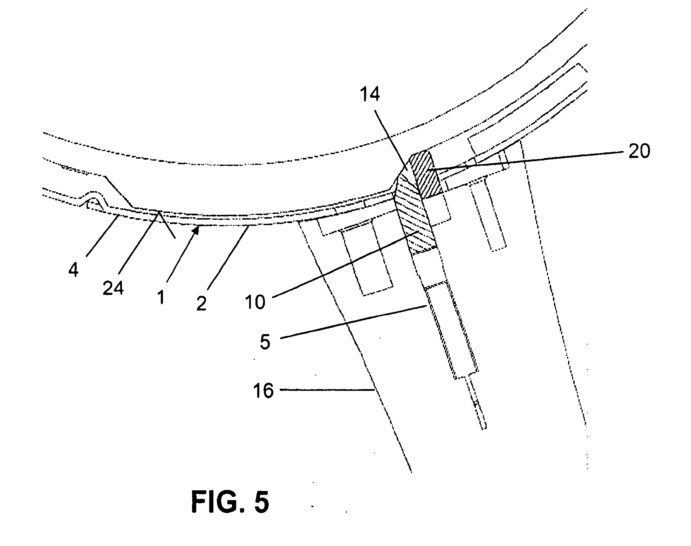

Die Figur 4 zeigt den Ausgangszustand, in dem der Deckel 4 auf den Topf 2 aufgesetzt ist, die Bajonette 8 und 23 jedoch noch ausser Eingriff sind. Das Verriegelungselement 7 und das Sicherheitselement 9 liegen in einer Ausnehmung 37 am Rand 3 an. Der Nocken 20 deformiert somit den Dichtungsring 34 derart, dass ein Druckaufbau im Schnellkochtopf 1 nicht möglich ist. Das Verriegelungselement 7 befindet sich in der in Figur 3 gezeigten Position, wobei hier jedoch der Bolzen 28 sich in der untersten Position befindet. Zum Schliessen des Schnellkochtopfes 1 wird der Topf 2 in Richtung des Pfeils 36 in die in Figur 5 gezeigte Position gedreht. Selbstverständlich ist die Bewegung relativ, es kann somit auch anstelle des Topfes 2 der Deckel 4 gedreht werden.

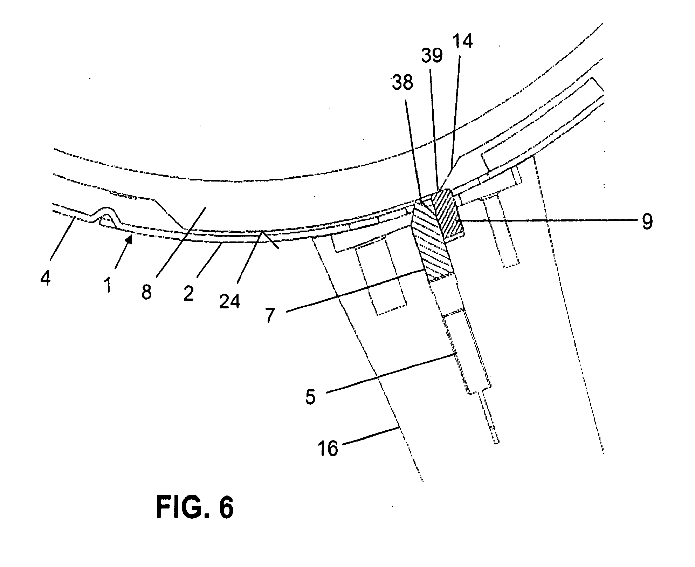

In der in Figur 5 gezeigten Stellung wird das Verriegelungselement 7 an der ersten Rampe 14 angepresst und durch diese teilweise radial nach Aussen versetzt. Das Verriegelungselement 7 wird somit durch die erste Rampe 14 in die in Figur 2 gezeigte Stellung bewegt. Der Nocken 20 befindet sich noch in der inneren Position gemäss Figur 4. Der Dichtungsring 34 ist somit weiterhin deformiert und somit undicht. Ein Druckaufbau im Schnellkochtopf 1 ist auch dann nicht möglich, wenn das Verriegelungselement 7 infolge von Toleranzen zwischen dem Topf 2 und dem Deckel 4 bezüglich des Druckelementes 6 noch nicht wirksam ist. Die Sicherheit ist hier somit vor allem durch das Sicherheitselement 9 gewährleistet. Beim Weiterdrehen gelangen das Verriegelungselement 7 und das Sicherheitselement 9 in die in Figur 6 gezeigten Positionen, die durch das Bajonett 8 gesteuert sind. Das Sicherheitselement 9 ist radial nach Aussen versetzt und liegt federelastisch an der Frontseite 24 des Bajonetts 8 an. Das Verriegelungselement 7 ist ebenfalls radial nach Aussen versetzt und befindet sich nun in der in Figur 2 gezeigten Stellung. Ein Druckaufbau ist somit in dieser Stellung durch die Position des Verriegelungselementes 7 nicht möglich. Der Dichtungsring 34 ist somit nicht mehr deformiert und könnte einen Druckaufbau ermöglichen. Der Topf 2 wird nun weitergedreht, bis ein Bajonett 8' an einer Einbuchtung 40 des Topfes 2 anliegt. Das Verriegelungselement 7 befindet sich nun unmittelbar nach der zweiten Rampe 15 in einer Ausnehmung 37. Das Sicherheitselement 9 befindet sich hingegen weiterhin in der radial nach Aussen versetzten Position, ist somit nicht wirksam. Da sich das Verriegelungselement 7 nun in der in Figur 3 gezeigten Position befindet, kann der Bolzen 28 beim Druckaufbau nach Aussen bewegen. Der Bolzen 28 ist bei dieser Bewegung in einer Hülse 31 geführt, die mit einem Befestigungsteil 32 am Deckel 4 befestigt ist. Ein unterer Anschlagring 30 und ein oberer Anschlagring 29 begrenzen die Bewegung des Bolzens 28 im Fall eines Druckaufbaus. In der in Figur 3 gezeigten Position ist das an sich bekannte Druckelement 6 dicht. Ein weiterer Druckaufbau ist hier somit möglich.

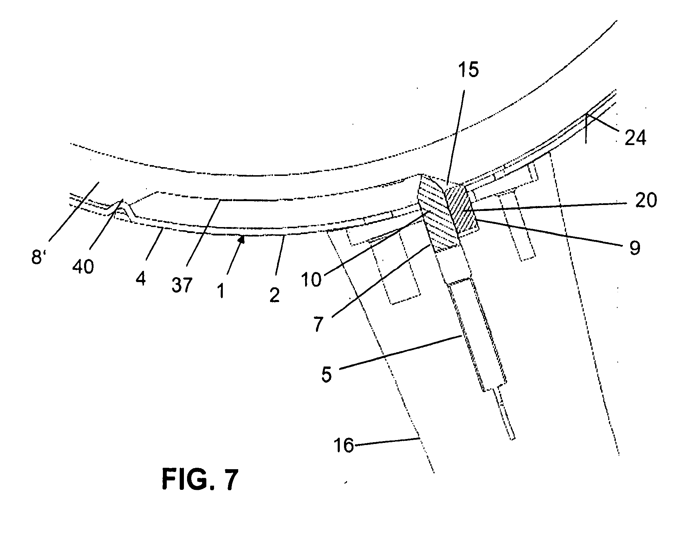

Zum Öffnen des Schnellkochtopfes 1 wird der Topf 2 in Figur 7 im Uhrzeigersinn gedreht. Eine solche Drehbewegung ist erst möglich, nachdem der Bolzen 28 sich mit seinem oberen Ende nicht mehr in der Öffnung 25 befindet. Damit die Drehung möglich ist, muss somit der Überdruck im Schnellkochtopf 1 im Wesentlichen abgebaut sein. Beim Öffnen wird das Verriegelungselement 7 radial nach Aussen bewegt, während zunächst das Sicherheitselement 9 sich in der äusseren Stellung befindet. Ein Druckaufbau ist während dieser Bewegung nicht möglich, da sich das Verriegelungselement 7 in der in Figur 2 gezeigten Stellung befindet. Beim Weiterdrehen gelangen das Sicherheitselement 9 und das Verriegelungselement 7 wieder zur ersten Rampe 14. Zuerst wird das Sicherheitselement 9 radial nach Innen bewegt und wird somit wieder wirksam. Schliesslich gelangt das Verriegelungselement 7 aus der wirksamen Position in die Ausgangsstellung. Der Deckel 4 kann nun vom Topf 2 abgehoben werden.

### BEZUGSZEICHENLISTE

- 1: Schnellkochtopf
- 2: Topf
- 3: Rand
- 4: Deckel
- 5: Verriegelungsvorrichtung
- 6: Druckelement
- 7: Verriegelungselement
- 8: Bajonett
- 9: Sicherheitselement
- 10: Steuernocken
- 11: Vorderes Ende
- 12: Ausnehmung
- 13: Rand
- 14: erste Rampe
- 15: zweite Rampe
- 16: Beschlag
- 17: Ausnehmung
- 18: Ausnehmung
- 19: Führungselement
- 20: Nocken
- 21: Durchgang
- 22: Befestigungsbohrungen
- 23: Bajonett (Topf)
- 24: Frontseite
- 25: Öffnung
- 26: Abdeckung
- 27: Öffnung
- 28: Bolzen
- 29: oberer Anschlagring
- 30: unterer Anschlagring
- 31: Hülse
- 32: Befestigungsteil
- 33: Führungsteil
- 34: Dichtungsring
- 35: Pfeil
- 36: Pfeil
- 37: Ausnehmung
- 38: Kante
- 39: Fläche

## Patentansprüche

1. Schnellkochtopf, der einen Topf (2) mit einem Boden und einer Seitenwandung sowie einem oberen Rand (3) besitzt, mit einem einen Dichtungsring (34) aufweisenden Deckel (4), der dicht am genannten oberen Rand (3) mit dem Topf (2) verbindbar ist und mit einer Verriegelungsvorrichtung (5), welche bei einem vorbestimmten Überdruck den Deckel (4) in Zusammenarbeit mit einem am Deckel (4) angeordneten Druckelement (6) unlösbar mit dem Topf (2) verbindet, wobei die Verriegelungsvorrichtung (5) ein Verriegelungselement (7) aufweist, das beim Schliessen des Deckels (4) von einem Bajonett (8) des genannten Randes (3) gesteuert ist, **dadurch gekennzeichnet dass** in einem Beschlag (16) im Deckel (4) ein Sicherheitselement (9) gelagert ist, das beim Drehen des Deckels (4) ebenfalls vom genannten Bajonett (8) gesteuert ist und auf einen im Deckel (4) gelagerten Dichtungsring (34) so wirkt, dass der Dichtungsring (34) so lange undicht ist, bis die Verriegelungsvorrichtung (5) sicherungswirksam ist, dass das Verriegelungselement (7) in Drehschliessrichtung des Deckels (4) gesehen vor dem Sicherheitselement (9) angeordnet ist, dass das Sicherheitselement (9) und das Verriegelungselement (7) nacheinander an einer Rampe (14) des Bajonetts (8) steuerbar sind, dass beim Schliessen des Schnellkochtopfs zuerst das Verriegelungselement (7) und anschliessend das Sicherheitselement (9) radial nach aussen bewegbar sind.

2. Schnellkochtopf nach Anspruch 1, **dadurch gekennzeichnet, dass** das Verriegelungselement (5) im genannten Beschlag (16) gelagert ist.

3. Schnellkochtopf nach einem der Ansprüche 1 oder 2, **dadurch gekennzeichnet, dass** das Verriegelungselement (7) einen Steuernocken (10) aufweist, der mit einem vorderen Ende (11) eine Ausnehmung (12) in einem Rand (13) des Deckels (4) durchgereift.

4. Schnellkochtopf nach Anspruch 3, **dadurch gekennzeichnet, dass** das Sicherheitselement (7) ebenfalls einen Nocken (20) aufweist, der die genannte Ausnehmung (12) durchgreift und den Dichtungsring so lange deformiert, bis das Verriegelungselement (7) sich in der verriegelnden Stellung befindet.

5. Schnellkochtopf nach Anspruch 3 oder 4, **dadurch gekennzeichnet, dass** der Steuernocken (10) am genannten vorderen Ende (11) doppelkeilförmig ausgebildet ist.

6. Schnellkochtopf nach einem der Ansprüche 1 bis 5, **dadurch gekennzeichnet, dass** der Beschlag (16) als ein am Deckel (4) befestigter Griff ausgebildet ist.

7. Schnellkochtopf nach einem der Ansprüche 1 bis 6, dass beim Schliessen des Deckels (4) das Verriegelungselement (7) an einer Rampe (14) des Bajonetts (8) radial nach aussen ausgelenkt und kurz vor erreichen der Schliessstellung an einer nachfolgenden Rampe (15) desselben Bajonetts(8) radial nach innen bewegt wird.

8. Schnellkochtopf nach Anspruch 7, **dadurch gekennzeichnet, dass** das Sicherheitselement (9) im wesentlichen gleich wie das Verriegelungselement (5) am genannten Bajonett (8) radial nach Aussen bewegt wird, diese Bewegung jedoch derjenigen des Sicherheitselementes (9) nachläuft.

9. Schnellkochtopf nach Anspruch 8, **dadurch gekennzeichnet, dass** das Sicherheitselement (9) in der Schliessstellung des Deckels (4) durch das Bajonett (8) in einer unwirksamen Stellung gehalten wird.

10. Schnellkochtopf nach Anspruch 1, **dadurch gekennzeichnet, dass** das Sicherheitselement (9) und die Verriegelungsvorrichtung (5) in unterschiedlichen Beschlägen angeordnet sind.

## Claims

1. Pressure cooker which has a pot (2) having a base and a side wall and also an upper rim (3), having a lid (4) which has a sealing ring (34) and can be connected to the pot (2) in a sealed manner along said upper rim (3), and having a locking arrangement (5) which; at a predetermined positive pressure, connects the lid (4) to the pot (2) in a non-releasable manner in conjunction with a pressure element (6) arranged on the lid (4), wherein the locking arrangement (5) has a locking element (7) which, when the lid (4) is closed, is controlled by a bayonet (8) on said rim (3), **characterized in that** a safety element (9) is mounted in a fitting (16) in the lid (4), said safety element (9) likewise being controlled by said bayonet (8) when the lid (4) is rotated and acting on a sealing ring (34) mounted in the lid (4) such that the sealing ring (34) is not seal-tight until the locking arrangement (5) acts in a securing manner, **in that** the locking element (7) is arranged before the safety element (9) as seen in the rotational direction of closure of the lid (4), **in that** the safety element (9) and the locking element (7) can be controlled one after the other on a ramp (14) of the bayonet (8), and **in that** when the pressure cooker is closed, first of all the locking element (7) and subsequently the safety element (9) can be moved radially outwards.

2. Pressure cooker according to Claim 1, **characterized in that** the locking element (5) is mounted in said fitting (16).

3. Pressure cooker according to Claim 1 or 2, **characterized in that** the locking element (7) has a control protuberance (10), a front end (11) of which engages through a cutout (12) in a rim (13) of the lid (4).

4. Pressure cooker according to Claim 3, **characterized in that** the safety element (9) likewise has a protuberance (20), which engages through said cutout (12) and deforms the sealing ring until the locking element (7) is in the locking position.

5. Pressure cooker according to Claim 3 or 4, **characterized in that** the control protuberance (10) is configured in the form of a double wedge at said front end (11).

6. Pressure cooker according to one of Claims 1 to 5, **characterized in that** the fitting (16) is configured as a handle secured to the lid (4).

7. Pressure cooker according to one of Claims 1 to 6, **characterized in that** when the lid (4) is closed the locking element (7) is deflected radially outwards at a ramp (14) of the bayonet (8) and, shortly before the closed position is reached, is moved radially inwards at a subsequent ramp (15) of the same bayonet (8).

8. Pressure cooker according to Claim 7, **characterized in that** the safety element (9) is moved radially outwards at said bayonet (8) in substantially the same manner as the locking element (7) but this movement follows that of the safety element (9).

9. Pressure cooker :according to Claim 8, **characterized in that** the safety element (9) is held in an inactive position by the bayonet (8) when the lid (4) is.in the closed position.

10. Pressure cooker according to Claim 1, **characterized in that** the safety element (9) and the locking element (5) are arranged in different fittings.

## Revendications

1. Autocuiseur, qui possède un pot (2) comportant un fond et une paroi latérale ainsi qu'un bord supérieur (3), comportant un couvercle (4) comprenant une bague d'étanchéité (34), lequel couvercle peut être relié au pot (2) de manière étanche au niveau dudit bord supérieur (3), et comportant un dispositif de verrouillage (5) qui en coopération avec un élément de pression (6) disposé sur le couvercle (4), relie de manière non libérable le couvercle (4) au pot (2) en cas d'une surpression prédéfinie, le dispositif de verrouillage (5) comprenant un élément, de verrouillage (7) qui, lors de la fermeture du couvercle (4), est commandé par une baïonnette (8) dudit bord (3), **caractérisé en ce qu'**un élément de sécurité (9) est monté dans une ferrure (16) dans le couvercle (4), lequel élément de sécurité, lors de la rotation du couvercle (4), est également commandé par ladite baïonnette (8) et agit de telle sorte sur une bague d'étanchéité (34) montée dans le couvercle (4) que la bague d'étanchéité (34) soit non étanche jusqu'à ce que le dispositif de verrouillage (5) soit actif du point de vue de la sécurité, **en ce que** l'élément de verrouillage (7) vu dans le sens de rotation de fermeture du couvercle (4), est disposé avant l'élément de sécurité (9), **en ce que** l'élément de sécurité (9) et l'élément de verrouillage (7) peuvent être commandées l'un après l'autre au niveau d'une rampe (14) de la baïonnette (8), **en ce que**, lors de la fermeture de l'autocuiseur, d'abord l'élément de verrouillage (7) et ensuite l'élément de sécurité (9) peuvent être déplacés radialement vers l'extérieur.

2. Autocuiseur selon la revendication 1, **caractérisé en ce que** l'élément de verrouillage (5) est montré dans ladite ferrure (16).

3. Autocuiseur selon la revendication 1 ou 2, **caractérisé en ce que** l'élément de verrouillage (7) comprend une came de commande (10) qui, avec une extrémité avant (11), s'engage à travers un évidement (12) dans un bord (13) du couvercle (4).

4. Autocuiseur selon la revendication 3, **caractérisé en ce que** l'élément de sécurité (9) comprend également une came (20) qui s'engage à travers ledit évidement (12) et déforme la bague d'étanchéité jusqu'à ce que l'élément de verrouillage (7) se trouve dans la position de verrouillage.

5. Autocuiseur selon la revendication 3 ou 4, **caractérisé en ce que** la came de commande (10) est réalisée en forme de doublé coin au niveau de ladite extrémité avant (11).

6. Autocuiseur salon l'une quelconque des revendications 1 à 5, **caractérisé en ce que** la ferrure (16) est réalisée en tant que poignée fixée sur le couvercle (4).

7. Autocuiseur selon l'une quelconque des revendications 1 à 6, **caractérisé en ce que**, lors de la fermeture du couvercle (4), l'élément de verrouillage (7) est dévié radialement vers l'extérieur au niveau d'une rampe (14) de la baïonnette (8) et, peu avant d'atteindre la position de fermeture, est déplacé radialement vers l'intérieur au niveau d'une rampe (15) suivante de cette même baïonnette (8).

8. Autocuiseur selon la revendication 7, **caractérisé en ce que** l'élément de sécurité (9) est déplacé radialement vers l'extérieur au niveau de ladite baïonnette (8), essentiellement de la même manière que l'élément de verrouillage (7), ce déplacement suivant cependant celui de l'élément de sécurité (9).

9. Autocuiseur selon la revendication 8, **caractérisé en ce que** l'élément de sécurité (9), dans la position de fermeture du couvercle (4), est maintenu dans une position non active au moyen de la baïonnette (8).

10. Autocuiseur selon la revendication 1, **caractérisé en ce que** l'élément de sécurité (9) et le dispositif de verrouillage (5) sont disposés dans des ferrures différentes.
